# EUROPÄISCHE PATENTSCHRIFT

(11) **EP 3 482 987 B1**
(45) Veröffentlichungstag und Bekanntmachung des Hinweises auf die Patenterteilung: **13.05.2020**
(21) Anmeldenummer: 18161530.3
(22) Anmeldetag: 13.03.2018
(51) Int. Cl.: B60K 11/00, H01M 10/60, B32B 7/12, B32B 27/08, B32B 27/32, B32B 27/34, B32B 1/08, F16L 11/04

(54) **VERWENDUNG EINER ROHRLEITUNG ALS TEMPERIER-ROHRLEITUNG**
USE OF A PIPELINE FOR TEMPERING
UTILISATION D'UNE CONDUITE EN TANT QUE CONDUITE DE MISE EN TEMPÉRATURE

(43) Veröffentlichungstag der Anmeldung: 15.05.2019
(73) Patentinhaber: TI Automotive (Fuldabrück) GmbH, 34277 Fuldabrück (DE)
(72) Erfinder: ZIMMER, Werner, 34212 Melsungen/Röhrenfurth (DE); FAHRENHOLZ, Frank, 34128 Kassel (DE); ARNOLD, Siegfried, 34128 Kassel (DE); SCHRAMOWSKI, Martin, 34134 Kassel (DE)
(74) Vertreter: Andrejewski - Honke Patent- und Rechtsanwälte Partnerschaft mbB

(56) Entgegenhaltungen:
- EP-A2- 1 031 451
- DE-C1- 19 535 489
- DE-T2- 60 030 161
- FR-A1- 2 856 461

## Beschreibung

Die Erfindung betrifft die Verwendung einer Rohrleitung als Temperier-Rohrleitung - insbesondere als Kühl-Rohrleitung - in Kraftfahrzeugen, wobei ein Temperiermedium durch die Rohrleitung geführt wird. - Derartige Temperier-Rohrleitungen werden vorzugsweise in Temperier-Kreisläufen von Kraftfahrzeugen eingesetzt, wobei ein Temperiermittel, insbesondere ein flüssiges Temperiermittel durch die Temperier-Rohrleitung geführt wird. Besonders bevorzugt ist die Temperier-Rohrleitung als Kühl-Rohrleitung ausgebildet und ein Kühlmittel wird im Rahmen eines Kühlmittel-Kreislaufes des Kraftfahrzeuges durch die Kühl-Rohrleitungen geführt. Ein besonders bevorzugter Anwendungszweck der erfindungsgemäßen Temperier-Rohrleitungen ist der Einsatz in Temperier-Systemen von Elektrofahrzeugen oder von Hybrid-Kraftfahrzeugen mit Elektromotor und Verbrennungsmotor. Die erfindungsgemäße Temperier-Rohrleitung, insbesondere Kühl-Rohrleitung dient dort insbesondere zur Temperierung bzw. Kühlung der Batteriesysteme.

Temperier-Rohrleitungen bzw. Kühl-Rohrleitungen sind aus der Praxis in vielen verschiedenen Ausführungsformen bekannt. Vor allem sind auch Temperier-Rohrleitungen für die Temperierung von Kraftfahrzeugkomponenten bekannt. Die bislang bekannten Rohrleitungen lassen jedoch oftmals im Hinblick auf ihre Temperaturbeständigkeit und/oder im Hinblick auf ihre thermische Isolierung zu wünschen übrig. Wenn andererseits Rohrleitungen mit ausreichender Temperaturbeständigkeit und zufriedenstellender thermischer Isolierung erzeugt werden können, ist dies oftmals mit hohem Aufwand bzw. Materialaufwand und somit mit hohen Kosten verbunden. Auch sind viele der aus der Praxis bekannten Temperier-Rohrleitungen mechanisch nicht ausreichend resistent, obwohl eine solche mechanische Resistenz gerade in Kraftfahrzeugen wünschenswert ist.

Aus DE 600 30 161 T2 ist eine Rohrleitung für den Transport einer Kühlflüssigkeit in einem Kraftfahrzeug bekannt. Dabei handelt es sich um eine mehrschichtige Rohrleitung mit einer Außenschicht aus vulkanisiertem Elastomer, einer Sperrschicht bzw. Zwischenschicht aus Polyamid und einer Innenschicht aus vulkanisiertem Elastomer. Die Außenschicht und die Zwischenschicht sowie die Zwischenschicht und die Innenschicht sind über Haftvermittlerschichten miteinander verbunden. Diese Kraftfahrzeug-Rohrleitung hat sich nicht bewährt und insbesondere lässt die thermische Isolierung zu wünschen übrig.

Dementsprechend liegt der Erfindung das technische Problem zugrunde, eine Rohrleitung anzugeben, die auf effektive Weise als Temperier-Rohrleitung verwendet werden kann und die insbesondere im Hinblick auf ihre thermische Isolierung und auf ihre Temperaturbeständigkeit sowie auf ihre mechanische Festigkeit allen Anforderungen genügt und weiterhin auch mit geringem Aufwand und geringen Kosten herstellbar ist.

Zur Lösung dieses technischen Problems lehrt die Erfindung die Verwendung einer Rohrleitung als Temperier-Rohrleitung - insbesondere als Kühl-Rohrleitung - in Kraftfahrzeugen, wobei ein Temperiermedium durch die Rohrleitung geführt wird, wobei die Rohrleitung folgenden Schichtaufbau von außen nach innen aufweist:
- eine Außenschicht aus zumindest einem, vorzugsweise aus einem Polyolefin,
- eine erste Haftvermittlerschicht,
- eine Sperrschicht aus zumindest einem, vorzugsweise aus einem Polyamid,
- eine zweite Haftvermittlerschicht,
- eine Innenschicht aus zumindest einem, vorzugsweise aus einem Polyolefin,
wobei die gesamte Wanddicke der Rohrleitung 0,5 bis 3,5 mm, vorzugsweise 0,5 bis 3 mm beträgt
und wobei die Außenschicht aus Polyethylen bzw. im Wesentlichen aus Polyethylen oder aus Polypropylen bzw. im Wesentlichen aus Polypropylen besteht.

Die erfindungsgemäße Temperier-Rohrleitung kann in Temperiersystemen von herkömmlichen Kraftfahrzeugen mit Verbrennungsmotor eingesetzt werden. Nach einer besonderen Ausführungsform der Erfindung wird die erfindungsgemäße Temperier-Rohrleitung in Temperier-Systemen von Elektrofahrzeugen oder in Temperier-Systemen von Hybrid-Kraftfahrzeugen mit Elektromotor und Verbrennungsmotor eingesetzt.

Gemäß einer bevorzugten Ausführungsform der Erfindung wird die Rohrleitung als Temperier-Rohrleitung in einem Temperier-System zur Temperierung bzw. zur Kühlung der Batterie eines Kraftfahrzeuges eingesetzt. Entsprechend einer weiteren bevorzugten Ausführungsform der Erfindung wird die Rohrleitung als Temperier-Rohrleitung einer Klimaanlage eines Kraftfahrzeuges verwendet.

Eine empfohlene Ausführungsform der Erfindung ist dadurch gekennzeichnet, dass die Rohrleitung als Temperier-Rohrleitung zur Temperierung bzw. zur Kühlung von Kraftfahrzeug-Batterien in Elektro-Kraftfahrzeugen oder in Hybrid-Kraftfahrzeugen eingesetzt wird.

Es liegt im Rahmen der Erfindung, dass als Temperiermedium bzw. als Kühlmedium ein fluides Medium und insbesondere ein flüssiges Medium eingesetzt wird. Zweckmäßigerweise handelt es sich bei dem Temperiermedium bzw. Kühlmedium um ein Flüssigkeitsgemisch und bevorzugt um ein Alkohol-Wasser-Gemisch. Eine sehr empfohlene Ausführungsform zeichnet sich dadurch aus, dass als Temperiermedium bzw. Kühlmedium ein GlykolWasser-Gemisch eingesetzt wird.

Es liegt im Rahmen der Erfindung, dass die Außenschicht der erfindungsgemäßen Temperier-Rohrleitung aus Polyethylen bzw. im Wesentlichen aus Polyethylen besteht. Vorzugsweise besteht dabei die Außenschicht aus HDPE bzw. im Wesentlichen aus HDPE. - Nach einer anderen Ausführungsform der Erfindung besteht die Außenschicht aus Polypropylen bzw. im Wesentlichen aus Polypropylen und gemäß einer Ausführungsvariante aus HDPP bzw. im Wesentlichen aus HDPP.

Zwischen der Außenschicht und der Sperrschicht ist erfindungsgemäß eine erste Haftvermittlerschicht angeordnet. Nach einer bevorzugten Ausführungsform der Erfindung ist die erste Haftvermittlerschicht eine Haftvermittlerschicht auf Basis eines Polyolefins oder auf Basis eines Polyamids. Eine empfohlene Ausgestaltung der Erfindung ist dadurch gekennzeichnet, dass die erste Haftvermittlerschicht ein mit einem Carbonsäurederivat - insbesondere mit einem Maleinsäurederivat - modifiziertes Polyolefin aufweist bzw. aus diesem modifizierten Polyolefin besteht bzw. im Wesentlichen besteht.

Erfindungsgemäß ist in der Mitte der Temperier-Rohrleitung bzw. zwischen der ersten Haftvermittlerschicht und der zweiten Haftvermittlerschicht der Temperier-Rohrleitung eine Sperrschicht aus Polyamid angeordnet. Eine sehr empfohlene Ausführungsform der Erfindung ist dadurch gekennzeichnet, dass die Sperrschicht aus Polyamid 6 bzw. im Wesentlichen aus Polyamid 6 besteht. Diese Ausführungsform hat sich im Rahmen der Erfindung besonders bewährt. Es liegt im Rahmen der Erfindung, dass die Sperrschicht aus zumindest einer Substanz aus der Gruppe "Polyamid 6, Polyamid 612, Polyamid 10, Polyamid 11, Polyamid 12, semi-aromatisches Polyamid, Co-Polyamid" besteht bzw. im Wesentlichen besteht. Polyamid 6 ist für die Sperrschicht allerdings bevorzugt. - Es liegt im Rahmen der Erfindung, dass die Sperrschicht dicker ausgebildet ist als die erste Haftvermittlerschicht und/oder dicker ausgebildet ist als die zweite Haftvermittlerschicht. Zweckmäßigerweise ist die Sperrschicht zumindest 1,2-mal, vorzugsweise mindestens 1,5-mal und bevorzugt zumindest 1,8-mal so dick wie die erste Haftvermittlerschicht und/oder wie die zweite Haftvermittlerschicht.

Erfindungsgemäß ist zwischen der Sperrschicht und der Innenschicht der erfindungsgemäßen Rohrleitung bzw. Temperier-Rohrleitung die zweite Haftvermittlerschicht angeordnet. Gemäß bevorzugter Ausführungsform der Erfindung ist die zweite Haftvermittlerschicht eine Haftvermittlerschicht auf Basis eines Polyolefins oder auf Basis eines Polyamids. Entsprechend einer Ausführungsvariante der Erfindung ist die zweite Haftvermittlerschicht ein mit einem Carbonsäurederivat - insbesondere mit einem Maleinsäurederivat - modifiziertes Polyolefin.

Es liegt im Rahmen der Erfindung, dass die erste Haftvermittlerschicht und/oder die zweite Haftvermittlerschicht eine geringere Dicke aufweist als die Außenschicht. Zweckmäßigerweise ist die Außenschicht mindestens 1,2-mal so dick, vorzugsweise zumindest 1,5-mal und bevorzugt mindestens 2-mal so dick wie die erste Haftvermittlerschicht und/oder wie die zweite Haftvermittlerschicht. Erfindungsgemäß ist eine Innenschicht aus zumindest einem Polyolefin vorgesehen. Dabei besteht die Innenschicht aus diesem Polyolefin bzw. im Wesentlichen aus diesem Polyolefin. Eine empfohlene Ausführungsform der Erfindung ist dadurch gekennzeichnet, dass die Innenschicht aus Polyethylen bzw. im Wesentlichen aus Polyethylen besteht. Gemäß einer Ausführungsvariante besteht die Innenschicht aus HDPE bzw. im Wesentlichen aus HDPE.

Eine andere bevorzugte Ausführungsform der Erfindung zeichnet sich dadurch aus, dass die Innenschicht aus Polypropylen bzw. im Wesentlichen aus Polypropylen besteht. Entsprechend einer Ausführungsvariante der Erfindung besteht die Innenschicht aus HDPP bzw. im Wesentlichen aus HDPP.

Es liegt im Rahmen der Erfindung, dass die Innenschicht dicker ist als die erste Haftvermittlerschicht und/oder dicker ist als die zweite Haftvermittlerschicht. Vorzugsweise ist die Innenschicht mindestens 1,2-mal, bevorzugt mindestens 1,5-mal und sehr bevorzugt mindestens 2-mal dicker als die erste Haftvermittlerschicht und/oder als die zweite Haftvermittlerschicht.

Nach sehr bevorzugter Ausführungsform der Erfindung wird die erfindungsgemäße Temperier-Rohrleitung durch Extrusion bzw. Koextrusion der Schichten hergestellt. Die erfindungsgemäß eingesetzten Materialien sowie die bevorzugten Schichtdicken der einzelnen Schichten ermöglichen eine sehr einfache und energiesparende Koextrusion. Ein besonderer Vorteil liegt darin, dass die Koextrusion bei moderaten Temperaturen durchgeführt werden kann. Eine bevorzugte Ausführungsform der Erfindung ist dadurch gekennzeichnet, dass die Dicke der Außenschicht 5 bis 60 %, vorzugsweise 8 bis 50 % und bevorzugt 10 bis 40 % der Gesamtwanddicke der Temperier-Rohrleitung beträgt. Vorzugsweise beträgt die Dicke der Sperrschicht 5 bis 50 %, bevorzugt 7 bis 45 % und sehr bevorzugt 10 bis 35 % der Gesamtwanddicke der erfindungsgemäßen Temperier-Rohrleitung. Es liegt im Rahmen der Erfindung, dass die Dicke der Innenschicht 5 bis 55 %, vorzugsweise 8 bis 50 % und bevorzugt 10 bis 40 % der Gesamtwanddicke der Temperier-Rohrleitung beträgt.

Gemäß einer empfohlenen Ausführungsform der Erfindung liegt die Dicke der Außenschicht im Bereich zwischen 0,1 und 1,5 mm, bevorzugt im Bereich zwischen 0,2 und 1 mm. Es empfiehlt sich, dass die Dicke der Sperrschicht im Bereich zwischen 0,05 bis 1 mm, vorzugsweise im Bereich zwischen 0,1 und 0,8 mm liegt. Zweckmäßigerweise beträgt die Dicke der Innenschicht 0,05 bis 1,5 mm, vorzugsweise 0,1 bis 0,7 mm. - Eine Ausführungsvariante der Erfindung ist dadurch gekennzeichnet, dass die Innenschicht als elektrisch leitfähige Schicht eingerichtet ist und dazu mit Leifähigkeitszusätzen versehen wird.

Wie eingangs bereits dargelegt können die erfindungsgemäßen Temperier-Rohrleitungen in herkömmlichen Kraftfahrzeugen mit Verbrennungsmotor vorteilhaft eingesetzt werden. Ein besonderes Anwendungsgebiet der Erfindung liegt darin, dass die erfindungsgemäße Temperier-Rohrleitung in Elektrofahrzeugen und/oder in Hybrid-Kraftfahrzeugen mit Elektromotor und Verbrennungsmotor eingesetzt wird. Insbesondere Elektro-Kraftfahrzeuge und Hybrid-Kraftfahrzeuge benötigen eine relativ hohe Anzahl von Temperier-Rohrleitungen in Temperier-Kreisläufen zum Kühlen oder Erwärmen von Fahrzeugkomponenten. Hier ist eine genau Temperaturkontrolle erforderlich und die Einhaltung präziser Temperaturgrenzbereiche. Das ist überraschenderweise mit der erfindungsgemäßen Temperier-Rohrleitung möglich, da diese ausgezeichnete thermische Eigenschaften, insbesondere optimale thermische Isolierungseigenschaften sowie eine hohe Temperaturbeständigkeit in einem relativ weiten Temperaturbereich aufweist. Hinzu kommt, dass die erfindungsgemäße Temperatur-Rohrleitung im Hinblick auf ihre mechanischen Eigenschaften allen Anforderungen genügt und insbesondere eine optimale mechanische Festigkeit aufweist. Außerdem zeichnet sich die erfindungsgemäße Rohrleitung durch eine hohe chemische Resistenz gegenüber vielen fluiden Medien aus sowie eine hervorragende Alterungsbeständigkeit. Hervorzuheben ist, dass die erfindungsgemäße Temperier-Rohrleitung nichtsdestoweniger mit verhältnismäßig einfachen Maßnahmen und mit relativ geringem Materialaufwand realisierbar ist, so dass sich auch die Kosten für die Herstellung der erfindungsgemäßen Temperier-Rohrleitung in Grenzen halten. Im Ergebnis zeichnet sich die erfindungsgemäße Temperier-Rohrleitung durch optimale thermische Eigenschaften aus, durch eine hohe mechanische Festigkeit sowie durch geringen Herstellungsaufwand und geringe Kosten.

Nachfolgend wird die Erfindung anhand einer lediglich ein Ausführungsbeispiel darstellenden Zeichnung näher erläutert. Es zeigen in schematischer Darstellung:

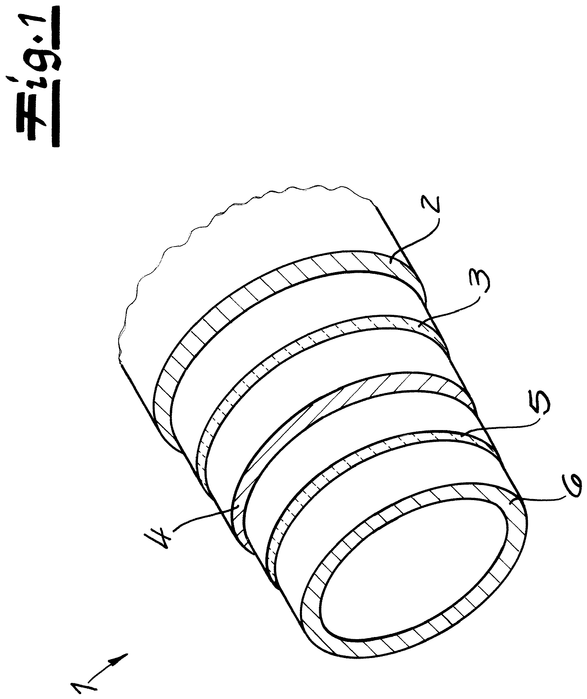

- **Fig. 1**: eine perspektivische Ansicht einer erfindungsgemäßen Temperier-Rohrleitung und

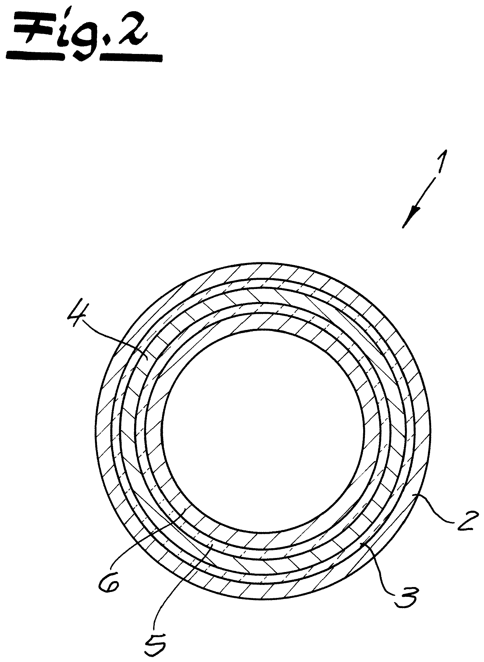

- **Fig. 2**: einen Schnitt durch den Gegenstand gemäß Fig. 1.

Die Figuren zeigen eine erfindungsgemäße Temperier-Rohrleitung 1, bei der es sich im Ausführungsbeispiel um eine Kühl-Rohrleitung 1 für Kraftfahrzeuge handeln mag. Durch diese Kühl-Rohrleitung 1 wird ein nicht dargestelltes Kühlmedium geführt und zwar vorzugsweise ein Alkohol-Wasser-Gemisch. Vorzugsweise und im Ausführungsbeispiel weist die Rohrleitung 1 fünf Schichten auf und zwar von außen nach innen eine Außenschicht 2, eine erste Haftvermittlerschicht 3, eine Sperrschicht 4, eine zweite Haftvermittlerschicht 5 und eine Innenschicht 6.

Die Außenschicht 2 besteht empfohlenermaßen und im Ausführungsbeispiel aus Polyethylen bzw. im Wesentlichen aus Polyethylen, wobei bevorzugt HDPE als Polyethylen eingesetzt wird. - Zweckmäßigerweise und im Ausführungsbeispiel ist die erste Haftvermittlerschicht 3 eine Haftvermittlerschicht 3 auf Basis eines Polyolefins oder auf Basis eines Polyamids. Dabei handelt es sich vorzugsweise um ein modifiziertes Polyolefin oder Polyamid.

Empfohlenermaßen und im Ausführungsbeispiel weist die Rohrleitung 1 eine mittlere Schicht in Form einer Sperrschicht 4 auf, die im Ausführungsbeispiel aus Polyamid 6 bzw. im Wesentlichen aus Polyamid 6 besteht. Grundsätzlich kann die Sperrschicht 4 auch aus zumindest einer Substanz aus der Gruppe "Polyamid 6, Polyamid 612, Polyamid 10, Polyamid 11, Polyamid 12, semi-aromatisches Polyamid, Co-Polyamid" bestehen bzw. im Wesentlichen bestehen.

Die zwischen der Sperrschicht 4 und der Innenschicht 6 angeordnete zweite Haftvermittlerschicht 5 ist bevorzugt und im Ausführungsbeispiel eine Haftvermittlerschicht 5 auf Basis eines Polyolefins oder auf Basis eines Polyamids. Dabei kann es sich um ein modifiziertes Polyolefin oder ein modifiziertes Polyamid handeln. - An die zweite Haftvermittlerschicht 5 schließt zweckmäßigerweise und im Ausführungsbeispiel die Innenschicht 6 an, die empfohlenermaßen und im Ausführungsbeispiel aus Polyethylen bzw. im Wesentlichen aus Polyethylen besteht. Bei dem Polyethylen der Innenschicht 6 handelt es sich vorzugsweise um HDPE.

Die gesamte Wanddicke der Rohrleitung 1 beträgt 0,5 bis 3,5 mm und bevorzugt 0,5 bis 3 mm. Es empfiehlt sich, dass die Außenschicht 2 und/oder die Sperrschicht 4 und/oder die Innenschicht 6 dicker ist als die erste Haftvermittlerschicht 3 und dicker ist als die zweite Haftvermittlerschicht 5. Vorzugsweise ist die Außenschicht 2 und/oder die Sperrschicht 4 und/oder die Innenschicht 6 mindestens 1,2-mal, bevorzugt mindestens 1,5-mal dicker als die erste Haftvermittlerschicht 3 und/oder die zweite Haftvermittlerschicht 5.

Die in den Figuren dargestellte Rohrleitung 1 kann besonders bevorzugt auch als Temperier-Rohrleitung 1 in Elektrofahrzeugen oder Hybridfahrzeugen eingesetzt werden. Eine empfohlene Anwendung der erfindungsgemäßen Rohrleitung 1 ist das Temperieren der Batterie eines Elektrofahrzeuges bzw. Hybridfahrzeuges bei dem Ladevorgang bzw. vor der Nutzung des Fahrzeugs.

## Patentansprüche

1. Verwendung einer Rohrleitung (1) als Temperier-Rohrleitung (1) - insbesondere als Kühl-Rohrleitung (1) - in Kraftfahrzeugen, wobei ein Temperiermedium durch die Rohrleitung (1) geführt wird, wobei die Rohrleitung (1) folgenden Schichtaufbau von außen nach innen aufweist:
- eine Außenschicht (2) aus zumindest einem Polyolefin,
- eine erste Haftvermittlerschicht (3),
- eine Sperrschicht (4) aus zumindest einem Polyamid,
- eine zweite Haftvermittlerschicht (5),
- eine Innenschicht (6) aus zumindest einem Polyolefin,
wobei die gesamte Wanddicke der Rohrleitung (1) 0,5 bis 3,5 mm beträgt
und wobei die Außenschicht (2) aus Polyethylen bzw. im Wesentlichen aus Polyethylen oder aus Polypropylen bzw. im Wesentlichen aus Polypropylen besteht.

2. Verwendung nach Anspruch 1, wobei die Rohrleitung (1) als Temperier-Rohrleitung (1) einer Klimaanlage eines Kraftfahrzeuges eingesetzt wird.

3. Verwendung nach Anspruch 1, wobei die Rohrleitung (1) als Temperier-Rohrleitung (1) zur Temperierung bzw. zur Kühlung in Elektro-Kraftfahrzeugen oder Hybrid-Kraftfahrzeugen eingesetzt wird und vorzugsweise zur Temperierung bzw. zur Kühlung von Kraftfahrzeug-Batterien in Elektro-Kraftfahrzeugen bzw. in Hybrid-Kraftfahrzeugen eingesetzt wird.

4. Verwendung nach einem der Ansprüche 1 bis 3, wobei als Temperiermedium ein Alkohol-Wasser-Gemisch eingesetzt wird.

5. Verwendung nach einem der Ansprüche 1 bis 4, wobei die Außenschicht (2) aus HDPE bzw. im Wesentlichen aus HDPE besteht.

6. Verwendung nach einem der Ansprüche 1 bis 5, wobei die erste Haftvermittlerschicht (3) eine Haftvermittlerschicht (3) auf Basis eines Polyolefins oder auf Basis eines Polyamids ist.

7. Verwendung nach einem der Ansprüche 1 bis 6, wobei die Sperrschicht (4) aus zumindest einer Substanz aus der Gruppe "Polyamid 6, Polyamid 612, Polyamid 10, Polyamid 11, Polyamid 12, semi-aromatisches Polyamid, Co-Polyamid" besteht bzw. im Wesentlichen besteht.

8. Verwendung nach einem der Ansprüche 1 bis 7, wobei die zweite Haftvermittlerschicht (5) eine Haftvermittlerschicht (5) auf Basis eines Polyolefins oder auf Basis eines Polyamids ist.

9. Verwendung nach einem der Ansprüche 1 bis 8, wobei die Innen-schicht (6) aus Polyethylen bzw. im Wesentlichen aus Polyethylen besteht.

10. Verwendung nach Anspruch 9, wobei die Innenschicht (6) aus HDPE bzw. im Wesentlichen aus HDPE besteht.

11. Verwendung nach einem der Ansprüche 1 bis 8, wobei die Innen-schicht (6) aus Polypropylen bzw. im Wesentlichen aus Polypropylen besteht.

12. Verwendung nach einem der Ansprüche 1 bis 11, wobei die Außenschicht (2) und/oder die Sperrschicht (4) und/oder die Innenschicht (6) dicker ist, vorzugsweise mindestens 1,5 mal dicker ist und bevorzugt mindestens 2 mal dicker ist als die erste Haftvermittlerschicht (3) und/oder die zweite Haftvermittlerschicht (5).

13. Verwendung nach einem der Ansprüche 1 bis 12, wobei die Rohrleitung (1) durch Koextrusion hergestellt wird.

## Claims

1. Use of a pipeline (1) as a temperature control pipeline (1), in particular as a cooling pipeline (1), in motor vehicles, wherein a temperature control medium is guided through the pipeline (1), wherein the pipeline (1) has the following layer structure from the outside in:
- an outer layer (2) comprised of at least one polyolefin,
- a first adhesion promoting layer (3),
- a barrier layer (4) comprised of at least one polyamide,
- a second adhesion promoting layer (5),
- an inner layer (6) comprised of at least one polyolefin,
wherein the entire wall thickness of the pipeline (1) measures 0.5 to 3.5 mm
and wherein the outer layer (2) consists of polyethylene or essentially of polyethylene or of polypropylene or essentially of polypropylene.

2. Use according to claim 1, wherein the pipeline (1) is used as a temperature control pipeline (1) of an air conditioning system of a motor vehicle.

3. Use according to claim 1, wherein the pipeline (1) is used as a temperature control pipeline (1) for temperature control or cooling in electric motor vehicles or hybrid motor vehicles, and preferably for the temperature control or cooling of motor vehicle batteries in electric motor vehicles or in hybrid motor vehicles.

4. Use according to one of claims 1 to 3, wherein an alcohol-water mixture is used as the temperature control medium.

5. Use according to one of claims 1 to 4, wherein the outer layer (2) consists of HDPE or essentially of HDPE.

6. Use according to one of claims 1 to 5, wherein the first adhesion promoting layer (3) is an adhesion promoting layer (3) based on a polyolefin or based on a polyamide.

7. Use according to one of claims 1 to 6, wherein the barrier layer (4) consists or essentially consists of at least one substance from the group "polyamide 6, polyamide 612, polyamide 10, polyamide 11, polyamide 12, semi-aromatic polyamide, co-polyamide".

8. Use according to one of claims 1 to 7, wherein the second adhesion promoting layer (5) is an adhesion promoting layer (5) based on a polyolefin or based on a polyamide.

9. Use according to one of claims 1 to 8, wherein the inner layer (6) consists of polyethylene or essentially of polyethylene.

10. Use according to claim 9, wherein the inner layer (6) consists of HDPE or essentially of HDPE.

11. Use according to one of claims 1 to 8, wherein the inner layer (6) consists of polypropylene or essentially of polypropylene.

12. Use according to one of claims 1 to 11, wherein the outer layer (2) and/or the barrier layer (4) and/or the inner layer (6) is thicker, preferably at least 1.5 times thicker, and most preferably at least 2 times thicker than the first adhesion promoting layer (3) and/or the second adhesion promoting layer (5).

13. Use according to one of claims 1 to 12, wherein the pipeline (1) is manufactured through coextrusion.

## Revendications

1. Utilisation d'une conduite (1) en tant que conduite de thermorégulation (1), en particulier comme conduite de refroidissement (1), dans des véhicules, sachant qu'un milieu de thermorégulation est passé à travers la conduite (1), sachant que la conduite (1) comporte la structure de couche suivante de l'extérieur vers l'intérieur :
- une couche extérieure (2) d'au moins un polyoléfine,
- une première couche d'agent adhésif (3),
- une couche de barrage (4) d'au moins un polyamide,
- une deuxième couche d'agent adhésif (5),
- une couche intérieure (6) d'au moins un polyoléfine,
sachant que toute l'épaisseur de paroi de la conduite (1) est de 0,5 à 3,5 mm
et sachant que la couche extérieure (2) est composée de polyéthylène ou pour l'essentiel de polyéthylène ou de polypropylène ou pour l'essentiel de polypropylène.

2. Utilisation selon la revendication 1, sachant que la conduite (1) est utilisée comme conduite de thermorégulation (1) d'une climatisation d'un véhicule.

3. Utilisation selon la revendication 1, sachant que la conduite (1) est utilisée comme conduite de thermorégulation (1) pour thermoréguler ou refroidir des véhicules électriques ou des véhicules hybrides et est utilisée de préférence pour thermoréguler ou refroidir des batteries de véhicule dans des véhicules électriques ou dans des véhicules hybrides.

4. Utilisation selon l'une quelconque des revendications 1 à 3, sachant que le milieu de thermorégulation est un mélange alcool-eau.

5. Utilisation selon l'une quelconque des revendications 1 à 4, sachant que la couche extérieure (2) est composée de polyéthylène à haute densité (PEHD) ou pour l'essentiel de PEHD.

6. Utilisation selon l'une quelconque des revendications 1 à 5, sachant que la première couche d'agent adhésif (3) est une couche d'agent adhésif (3) à base d'un polyoléfine ou à base d'un polyamide.

7. Utilisation selon l'une quelconque des revendications 1 à 6, sachant que la couche de barrage (4) est composée d'au moins ou pour l'essentiel d'une substance du groupe « polyamide 6, polyamide 612, polyamide 10, polyamide 11, polyamide 12, polyamide semi-aromatique, co-polyamide ».

8. Utilisation selon l'une quelconque des revendications 1 à 7, sachant que la deuxième couche d'agent adhésif (5) est une couche d'agent adhésif (5) à base d'un polyoléfine ou à base d'un polyamide.

9. Utilisation selon l'une quelconque des revendications 1 à 8, sachant que la couche intérieure (6) est composée de polyéthylène ou pour l'essentiel de polyéthylène.

10. Utilisation selon la revendication 9, sachant que la couche intérieure (6) est composée de polyéthylène à haute densité (PEHD) ou pour l'essentiel de PEHD.

11. Utilisation selon l'une quelconque des revendications 1 à 8, sachant que la couche intérieure (6) est composée de polypropylène ou pour l'essentiel de polypropylène.

12. Utilisation selon l'une quelconque des revendications 1 à 11, sachant que la couche extérieure (2) et/ou la couche de barrage (4) et/ou la couche intérieure (6) est plus épaisse, de préférence au moins 1,5 fois plus épaisse et de préférence au moins 2 fois plus épaisse que la première couche d'agent adhésif (3) et/ou la deuxième couche d'agent adhésif (5).

13. Utilisation selon l'une quelconque des revendications 1 à 12, sachant que la conduite (1) est fabriquée par coextrusion.
